# EUROPEAN PATENT SPECIFICATION

(11) **EP 4 610 423 B1**
(45) Date of publication and mention of the grant of the patent: **14.10.2026**
(21) Application number: 24217099.1
(22) Date of filing: 03.12.2024
(51) Int. Cl.: D06N 3/00, C08J 7/12, C08J 7/14, A41D 19/00, B29C 41/14, B29D 99/00, C08J 5/02, D06N 3/10

(54) **ITACONATE DIPPED GLOVES AND SURFACE TREATMENT METHOD**
IN ITACONAT EINGETAUCHTE HANDSCHUHE UND OBERFLÄCHENBEHANDLUNGSVERFAHREN
GANTS TREMPÉS DANS DE L'ITACONATE ET PROCÉDÉ DE TRAITEMENT DE SURFACE

(30) Priority: 28.02.2024 CN 202410221646
(43) Date of publication of application: 03.09.2025
(73) Proprietor: HuiHong (Nantong) Safety Products Co., Ltd., 226400 Nantong City Jiangsu (CN)
(72) Inventor: Lin, Dongliang, Nantong City, 226400 (CN)
(74) Representative: Gille Hrabal Partnerschaftsgesellschaft mbB Patentanwälte

(56) References cited:
- CN-A- 113 400 543
- CN-A- 114 685 922

## Description

### FIELD OF THE INVENTION

The present invention belongs to the technical field of labor protection products, and specifically relates to an itaconate dipped glove and a surface treatment method.

### BACKGROUND OF THE INVENTION

In the field of labor protection products, rubber-dipped gloves have been widely used. However, the rubber material of rubber-dipped gloves is extremely environmentally unfriendly. In order to obtain green and environmentally friendly rubber material, bio-based itaconate latex is designed as the rubber material for dipping. Although it can reduce the risk of allergies and shock during the wearing of gloves, the wear resistance and grip of such bio-based itaconate dipped gloves are poor, the service life is short, and the scope of application is also small. In order to improve the wear resistance and grip of gloves, the gloves need to be surface treated. Currently, most surface treatment methods use salt spraying to form a honeycomb structure on the surface of the gloves to improve their grip. However, this surface treatment method can easily destroy the rubber film properties of the gloves, resulting in poor wear resistance, and this method consumes a large amount of salt and water, and produces a large amount of salt-containing sewage, which is not environmentally friendly.

There are studies on the many problems of salt spraying surface treatment methods in the prior art, such as CN114292452A - Rubber pitted surface dipped gloves and manufacturing method thereof, etc., which solves many problems of the current salt spraying surface treatment method by compounding aromatic hydrocarbons and saturated alkanes with large differences in swelling rates to produce a morphology like dry orange peel on the rubber film surface of the gloves. However, the existing surface treatment method is only applicable to natural rubber-dipped gloves, but it is difficult to apply to bio-based itaconate dipped gloves. In addition, there is no research on improving the wear resistance and grip of bio-based itaconate dipped gloves in the prior art. Therefore, there is a need for a new technical solution to solve the above technical problems.

### SUMMARY

The objective of the present invention is to provide an itaconate dipped glove and a surface treatment method to solve the problems proposed in the above background that the current surface treatment method is not suitable for bio-based itaconate dipped gloves, and that there is no research in the prior art aimed at improving the wear resistance and grip of bio-based itaconate dipped gloves.

To achieve the above objective, the present invention provides the following technical solution: a method for surface treatment of rubber-dipped gloves, wherein a glove core is taken out after being dipped in an itaconate rubber solution, and directly immersed in a water grinding surface treatment solution for surface treatment within 10 to 180 seconds after rubber dripping and uniformizing, and the surface treated glove is taken out after 2 to 4 seconds, and is left to stand for 3 to 10 minutes, and are rinsed for 10 to 120 seconds by directly flushing the surface treated glove with water at 0 to 40°C, and are dried at 50 to 90°C for 10 to 40 minutes after the rinsing is completed;
wherein the water grinding surface treatment solution is formed by foaming a foaming agent, a metal inorganic salt and water with stirring at a rotation speed of 550 to 1350 rpm/min.

Furthermore, the composition of the water grinding surface treatment solution is as follows, by weight percentage: 1-60% of the foaming agent, 0.1-10% of the metal inorganic salt, and the balance of the water, wherein the foaming agent is one of azo compounds, nitroso compounds, fatty alcohol polyoxyethylene ether sodium sulfate, and rosin soap foaming agents; and the metal inorganic salt is sodium sulfate or sodium chloride.

An itaconate dipped glove is made by the method for surface treatment of rubber-dipped gloves described above.

Compared with the prior art, the beneficial effects of the present invention are that:
1. The present invention adopts a foaming method to prepare a water grinding surface treatment solution, so that cells similar to moon craters can be formed on the surface of the itaconate rubber layer of the itaconate dipped gloves under the treatment of the water grinding surface treatment solution, and then uses a rinsing method, so that the cells similar to moon craters formed on the surface of the itaconate rubber layer of the itaconate dipped gloves form irregular network patterns similar to moon texture under the impact of water, which effectively improves the wear resistance and grip of the itaconate dipped gloves, providing the surface of the itaconate dipped gloves with an anti-slip effect, effectively improves the service life of the bio-based itaconate dipped gloves, and greatly expands the application range of the bio-based itaconate dipped gloves.
2. The present invention forms a water grinding surface treatment solution by foaming a foaming agent, a metal inorganic salt and water by high-speed stirring, so that cells similar to moon craters can appear on the itaconate rubber layer under the action of the water grinding surface treatment solution, providing the bio-based itaconate dipped gloves with good wear resistance and strong grip, and at the same time, the purpose of energy conservation and emission reduction can be achieved in the production process of the bio-based itaconate dipped gloves, effectively reducing carbon emissions, and providing a promotion effect to obtain green and environmentally friendly rubber-dipped gloves.
3. The present invention adopts a soaking and rinsing method after dipping in an itaconate rubber solution, so that the treatment method can be applicable to the surface treatment of itaconate dipped gloves, thereby greatly improving the wear resistance and grip of the itaconate dipped gloves, and effectively avoiding the problem of environmental pollution caused by a large amount of salt-containing sewage generated by salt spraying.

### BRIEF DESCRIPTION OF THE DRAWINGS

FIG. 1 is a partial enlarged view of the surface of the itaconate dipped gloves after surface treatment of the present invention; and;
FIG. 2 is a partial enlarged view of the surface of the itaconate dipped gloves without surface treatment of the present invention.

### DETAILED DESCRIPTION OF THE INVENTION

The following examples are used to further illustrate the content of the present invention, and not intended to limit the application of the present invention.

### Example 1:

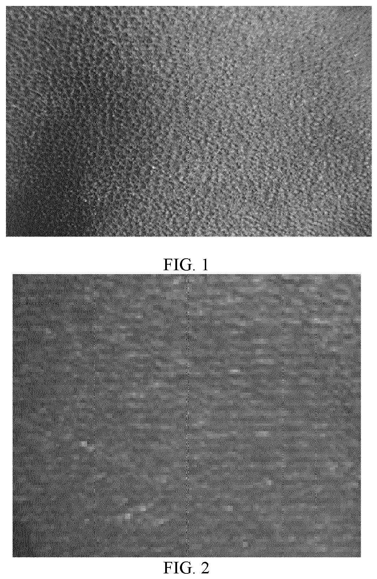

Preparation process of itaconate dipped gloves:
First, a glove core was knitted, sleeved on a mold and preheated; secondly, the glove core after the mold sleeving was immersed in a coagulant, and then single or multiple dipping was performed. The rubber material used for dipping was an itaconate rubber solution including 100 parts by weight of itaconate rubber, 68 parts by weight of diene compounds, 0.6 parts by weight of sulfur, 0.4 parts by weight of thiazoles, 2 parts by weight of potassium hydroxide, 5 parts by weight of zinc oxide, 1.5 parts by weight of polyurethane emulsion, and 12 parts by weight of wax emulsion (the formulation method of the itaconate rubber solution belongs to the prior art, and can be found in Chinese patent literature CN114685922A - Bio-based itaconate rubber gloves and preparation method thereof, which will not be repeated here); thirdly, after the last dipping in the itaconate rubber solution, it was taken out, and within 10 to 180 seconds after rubber dripping and uniformizing, directly immersed in a water grinding surface treatment solution for surface treatment, wherein the water grinding surface treatment solution was formed by foaming 45% fatty alcohol polyoxyethylene ether sodium sulfate, 2% sodium sulfate and 50% water with stirring at a rotation speed of 1280 rpm/min. At this time, the itaconate rubber solution dipped on the glove was not fixed, and the rubber surface of the glove could not be damaged, thereby effectively avoiding the weakening of the wear resistance and strength of the glove by the water grinding surface treatment solution, while cells similar to moon craters could be left on the itaconate rubber layer that was not fixed; and then, the glove was taken out immediately after being immersed in the water grinding surface treatment solution for 2 to 4 seconds, and left to stand for 3 to 10 minutes, and rinsed for 10 to 120 seconds by directly flushing the surface of the glove with water at 0 to 40°C. At this time, the cells similar to the moon craters on the itaconate rubber layer could form irregular network patterns similar to the moon texture under water rinsing (irregular network patterns similar to the moon texture appeared on the surface of the surface-treated itaconate dipped gloves, as shown in Figure 1). After the rinsing was completed, the glove was dried at 50-90°C for 10-40 minutes, and finally demolded to obtain itaconate dipped gloves. The prepared itaconate dipped gloves can have improved wear resistance and grip. Under the European standard EN388 certification, the wear resistance of the gloves can reach 8800 cycles. The tested data of the static friction coefficient tested on a friction coefficient meter according to the ISO 8295-1995 standard is 1.75.

### Example 2:

The preparation process of the itaconate dipped gloves in this example was the same as that in Example 1, except that:
the water grinding surface treatment solution was different, that is, the water grinding surface treatment solution in this example was formed by foaming 58% fatty alcohol polyoxyethylene ether sodium sulfate, 6% sodium sulfate and 36% water with stirring at a rotation speed of 1150rpm/min; and
the wear resistance of the itaconate dipped gloves treated with the water grinding surface treatment solution can reach 9600 cycles under the European standard EN388 certification. The tested data of the static friction coefficient tested on a friction coefficient meter according to the ISO 8295-1995 standard is 1.86.

### Example 3:

The preparation process of the itaconate dipped gloves in this example was the same as that in Example 1, except that:
the water grinding surface treatment solution was different, that is, the water grinding surface treatment solution in this example was formed by foaming 50% fatty alcohol polyoxyethylene ether sodium sulfate, 7% sodium sulfate and 42% water with stirring at a rotation speed of 1220rpm/min; and
the wear resistance of the itaconate dipped gloves treated with the water grinding surface treatment solution can reach 9200 cycles under the European standard EN388 certification. The tested data of the static friction coefficient tested on a friction coefficient meter according to the ISO 8295-1995 standard is 1.83.

### Example 4:

The preparation process of the itaconate dipped gloves in this example was the same as that in Example 1, except that:
the water grinding surface treatment solution was different, that is, the water grinding surface treatment solution in this example was formed by foaming 46% fatty alcohol polyoxyethylene ether sodium sulfate, 8% sodium sulfate and 46% water with stirring at a rotation speed of 1250rpm/min; and
the wear resistance of the itaconate dipped gloves treated with the water grinding surface treatment solution can reach 9800 cycles under the European standard EN388 certification. The tested data of the static friction coefficient tested on a friction coefficient meter according to the ISO 8295-1995 standard is 1.91.

### Comparative Example 1:

In this example, an itaconate dipped glove was produced. The dipping formula, dipping method and dipping process of the itaconate dipped glove were consistent with those in Example 1, except that the glove dipped with the itaconate rubber material was not immersed in a water grinding surface treatment solution for surface treatment (a partial enlarged view of the surface of the itaconate dipped glove without surface treatment is shown in Figure 2), so that the wear resistance of the itaconate dipped glove is only 6800 cycles, and the tested data of the static friction coefficient is only 1.33.

The following is a data statistical table of wear resistance and static friction coefficient of Examples 1-4 and Comparative Example 1:

| | Example 1 | Example 2 | Example 3 | Example 4 | Comparative Example 1 |
|---|---|---|---|---|---|
| Wear resistance | 8800 cycles | 9600 cycles | 9200 cycles | 9800 cycles | 6800 cycles |
| Static friction coefficient | 1.75 | 1.86 | 1.83 | 1.91 | 1. 33 |

From the comparison data of wear resistance and static friction coefficient of Examples 1-4 and Comparative Example 1 in the above table, it can be seen that after the itaconate dipped gloves are surface treated with the water grinding surface treatment solution, they are superior to the itaconate dipped gloves without surface treatment in terms of both wear resistance and grip, and their service life is effectively improved, the scope of application is expanded, while the purpose of energy saving and emission reduction is also achieved, effectively reducing carbon emissions, and providing a promotion effect to obtain green and environmentally friendly rubber-dipped gloves.

## Claims

1. A method for surface treatment of rubber-dipped gloves, wherein a glove core is taken out after being dipped in an itaconate rubber solution, **characterized in that** after the steps of rubber dripping and uniformizing, the glove core is directly immersed into a water grinding surface treatment solution for surface treatment of the rubber surface, and the surface treated glove is rinsed after being left to stand, and then dried after the rinsing is completed;
wherein the water grinding surface treatment solution is formed by foaming a foaming agent, a metal inorganic salt and water through high-speed stirring.

2. The method for surface treatment of rubber-dipped gloves according to claim 1, **characterized in that** the glove core is surface treated within 10 to 180 seconds after being dipped in the itaconate rubber solution, and the surface treatment time is 2 to 4 seconds.

3. The method for surface treatment of rubber-dipped gloves according to claim 2, **characterized in that** the surface treated glove is left to stand for 3 to 10 minutes before being rinsed.

4. The method for surface treatment of rubber-dipped gloves according to claim 1 or 3, **characterized in that** the rinsing treatment is performed by directly flushing the rubber surface of the surface treated glove with water at 0 to 40°C, and the rinsing treatment time is 10-120 seconds.

5. The method for surface treatment of rubber-dipped gloves according to claim 1, **characterized in that** the composition of the water grinding surface treatment solution is as follows, by weight percentage: 1 to 60% of the foaming agent, 0.1 to 10% of the metal inorganic salt, and the balance of the water.

6. The method for surface treatment of rubber-dipped gloves according to claim 5, **characterized in that** the foaming agent is one of azo compounds, nitroso compounds, fatty alcohol polyoxyethylene ether sodium sulfate, and rosin soap foaming agents.

7. The method for surface treatment of rubber-dipped gloves according to claim 5, **characterized in that** the metal inorganic salt is sodium sulfate or sodium chloride.

8. The method for surface treatment of rubber-dipped gloves according to claim 1, **characterized in that** the temperature of the drying treatment is 50 to 90°C, and the time of the drying treatment is 10 to 40 minutes.

9. The method for surface treatment of rubber-dipped gloves according to claim 1, **characterized in that** the rotation speed of the high-speed stirring is 550 to 1350 rpm/min.

10. An itaconate dipped glove, **characterized in that** the itaconate dipped glove is made by the method for surface treatment according to any one of claims 1 to 9.

## Patentansprüche

1. Verfahren zur Oberflächenbehandlung von gummibeschichteten Handschuhen, bei dem ein Handschuhkern nach dem Eintauchen in eine Itaconat-Gummilösung entnommen wird, **dadurch gekennzeichnet, dass** der Handschuhkern nach den Schritten des Aufbringens und der gleichmäßigen Verteilung des Gummis direkt in eine wasserbasierte Schleiflösung zur Oberflächenbehandlung der Gummioberfläche eingetaucht wird und der oberflächenbehandelte Handschuh nach einer Standzeit gespült und anschließend nach Abschluss des Spülvorgangs getrocknet wird;
wobei die wasserbasierte Schleiflösung zur Oberflächenbehandlung durch Aufschäumen eines Schaummittels, eines anorganischen Metallsalzes und von Wasser unter Hochgeschwindigkeitsrühren hergestellt wird.

2. Verfahren zur Oberflächenbehandlung von gummibeschichteten Handschuhen nach Anspruch 1, **dadurch gekennzeichnet, dass** der Handschuhkern innerhalb von 10 bis 180 Sekunden nach dem Eintauchen in die Itaconat-Gummilösung oberflächenbehandelt wird und die Oberflächenbehandlungszeit 2 bis 4 Sekunden beträgt.

3. Verfahren zur Oberflächenbehandlung von gummibeschichteten Handschuhen nach Anspruch 2, **dadurch gekennzeichnet, dass** der oberflächenbehandelte Handschuh vor dem Spülen 3 bis 10 Minuten lang stehen gelassen wird.

4. Verfahren zur Oberflächenbehandlung von gummibeschichteten Handschuhen nach Anspruch 1 oder 3, **dadurch gekennzeichnet, dass** die Spülbehandlung dadurch durchgeführt wird, dass die Gummioberfläche des oberflächenbehandelten Handschuhs direkt mit Wasser bei 0 bis 40 °C gespült wird, und die Spülbehandlungszeit 10 bis 120 Sekunden beträgt.

5. Verfahren zur Oberflächenbehandlung von gummibeschichteten Handschuhen nach Anspruch 1, **dadurch gekennzeichnet, dass** die Zusammensetzung der wasserbasierten Schleiflösung zur Oberflächenbehandlung in Gewichtsprozent wie folgt lautet: 1 bis 60 % des Schaumbildners, 0,1 bis 10 % des anorganischen Metallsalzes und als Rest Wasser.

6. Verfahren zur Oberflächenbehandlung von gummibeschichteten Handschuhen nach Anspruch 5, **dadurch gekennzeichnet, dass** das Schaummittel eines der folgenden ist: Azoverbindungen, Nitrosoverbindungen, Fettalkohol-Polyoxyethylenether-Natriumsulfat und Kolophoniumseifen-Schaummittel.

7. Verfahren zur Oberflächenbehandlung von gummibeschichteten Handschuhen nach Anspruch 5, **dadurch gekennzeichnet, dass** das anorganische Metallsalz Natriumsulfat oder Natriumchlorid ist.

8. Verfahren zur Oberflächenbehandlung von gummibeschichteten Handschuhen nach Anspruch 1, **dadurch gekennzeichnet, dass** die Temperatur der Trocknungsbehandlung 50 bis 90 °C beträgt und die Dauer der Trocknungsbehandlung 10 bis 40 Minuten beträgt.

9. Verfahren zur Oberflächenbehandlung von gummibeschichteten Handschuhen nach Anspruch 1, **dadurch gekennzeichnet, dass** die Drehzahl des Hochgeschwindigkeitsrührers 550 bis 1350 U/min beträgt.

10. Ein mit Itaconat beschichteter Handschuh, **dadurch gekennzeichnet, dass** der mit Itaconat beschichtete Handschuh durch das Verfahren zur Oberflächenbehandlung gemäß einem der Ansprüche 1 bis 9 hergestellt ist.

## Revendications

1. Procédé de traitement de surface de gants enduits de caoutchouc, dans lequel le corps du e gant est retirée après avoir été trempée dans une solution de caoutchouc itaconate, **caractérisé en ce qu'**après les étapes d'enduction et d'uniformisation du caoutchouc, l'armature de gant est directement immergée dans une solution aqueuse de traitement de surface par broyage destinée au traitement de la surface en caoutchouc, et le gant traité en surface est rincé après avoir été laissé au repos, puis séché une fois le rinçage terminé;
dans lequel la solution aqueuse de traitement de surface par broyage est obtenue en faisant mousser un agent moussant, un sel inorganique métallique et de l'eau par agitation à grande vitesse.

2. Procédé de traitement de surface de gants enduits de caoutchouc selon la revendication 1, **caractérisé en ce que** le corps du gant subit un traitement de surface dans un délai de 10 à 180 secondes après avoir été trempé dans la solution de caoutchouc itaconate, et **en ce que** la durée du traitement de surface est de 2 à 4 secondes.

3. Procédé de traitement de surface de gants enduits de caoutchouc selon la revendication 2, **caractérisé en ce que** le gant ayant subi le traitement de surface est laissé au repos pendant 3 à 10 minutes avant d'être rincé.

4. Procédé de traitement de surface de gants enduits de caoutchouc selon la revendication 1 ou 3, **caractérisé en ce que** le rinçage est effectué en aspergeant directement la surface en caoutchouc du gant traité avec de l'eau à une température comprise entre 0 et 40 °C, et que la durée du rinçage est de 10 à 120 secondes.

5. Procédé de traitement de surface de gants enduits de caoutchouc selon la revendication 1, **caractérisé en ce que** la composition de la solution aqueuse de traitement de surface par broyage est la suivante, en pourcentage en poids : 1 à 60 % d'agent moussant, 0,1 à 10 % de sel inorganique métallique, et le reste d'eau.

6. Procédé de traitement de surface de gants enduits de caoutchouc selon la revendication 5, **caractérisé en ce que** l'agent moussant est choisi parmi les composés azoïques, les composés nitrosés, le sulfate de sodium d'éther polyoxyéthylénique d'alcool gras et les agents moussants à base de savon de colophane.

7. Procédé de traitement de surface de gants enduits de caoutchouc selon la revendication 5, **caractérisé en ce que** le sel inorganique métallique est du sulfate de sodium ou du chlorure de sodium.

8. Procédé de traitement de surface de gants enduits de caoutchouc selon la revendication 1, **caractérisé en ce que** la température du traitement de séchage est comprise entre 50 et 90 °C, et la durée du traitement de séchage est comprise entre 10 et 40 minutes.

9. Procédé de traitement de surface de gants enduits de caoutchouc selon la revendication 1, **caractérisé en ce que** la vitesse de rotation de l'agitation à grande vitesse est comprise entre 550 et 1 350 tr/min.

10. Gant enduit d'itaconate, **caractérisé en ce que** ledit gant enduit d'itaconate est fabriqué selon l'un quelconque des procédés de traitement de surface visés aux revendications 1 à 9.
